# EUROPÄISCHE PATENTSCHRIFT

(11) **EP 0 893 155 B1**
(45) Veröffentlichungstag und Bekanntmachung des Hinweises auf die Patenterteilung: **28.04.2004**
(21) Anmeldenummer: 98113475.2
(22) Anmeldetag: 20.07.1998
(51) Int. Cl.: B01F 17/16, C08G 73/02, C08G 73/04, B01F 17/00

(54) **Versalzungsprodukte von Polyaminen und deren Einsatz als Dispergiermittel für Pigmente und Füllstoffe**
Polyamine salts and their use as dispersing agents for pigments or fillers
Sels de polyamines, leur utilisation comme agents dispersants pour des pigments ou des charges

(30) Priorität: 26.07.1997 DE 19732251
(43) Veröffentlichungstag der Anmeldung: 27.01.1999
(73) Patentinhaber: Byk-Chemie GmbH, 46483 Wesel (DE)
(72) Erfinder: Haubennestel, Karlheinz, 46487 Wesel (DE); Orth, Ulrich, Dr., 46485 Wesel (DE); Pritschins, Wolfgang, Dr., 46487 Wesel (DE); Krappe, Udo, Dr., 46483 Wesel (DE)
(74) Vertreter: Leifert, Elmar, Dr.

(56) Entgegenhaltungen:
- EP-A- 0 346 064
- GB-A- 657 081

## Beschreibung

Die Erfindung betrifft die Verwendung von Verbindungen, die durch die Reaktion von organischen Säuren mit Polyaminen erhalten werden, als Dispergiermittel für organische und anorganische Pigmente sowie Füllstoffe in organischen und wäßrigen Systemen. Diese Dispergiermittel eignen sich zur Stabilisierung von Feststoffteilchen in Bindemitteln, Lacken, Pigmentpasten, Kunststoffen und Kunststoffmischungen, zur Reduktion der Viskosität solcher Systeme sowie zur Verbesserung der Fließeigenschaften.

Um Feststoffe in flüssige Medien einbringen zu können, sind hohe mechanische Kräfte erforderlich. Es ist üblich Dispergiermittel einzusetzen, um diese Dispergierkräfte zu erniedrigen und um den zur Deflockulierung der Feststoffteilchen notwendigen Gesamtenergieeintrag in das System und damit auch die Dispergierzeit so gering wie möglich zu halten. Hierbei handelt es sich um oberflächenaktive Stoffe, von anionischer, kationischer oder neutraler Struktur. Diese Stoffe werden in kleiner Menge entweder direkt auf den Feststoff aufgebracht oder dem Dispergiermedium zugesetzt. Bekannt ist weiterhin, dass es auch nach vollständiger Deflockulierung der Feststoffagglomerate in Primärteilchen, nach dem Dispergierprozess zu Reagglomerationen kommt, wodurch der Dispergieraufwand teilweise oder vollständig zunichte gemacht wird. Als Folge der unzulänglichen Dispergierung bzw. durch Reagglomeration kommt es zu unerwünschten Effekten wie: Viskositätsanstieg in flüssigen Systemen, Farbtondrift und Glanzverluste in Lacken und Beschichtungen sowie Verringerung der mechanischen Festigkeit in Kunststoffen.

Von den Dispergiermitteln zur Einbringung fester Stoffe in flüssige Medien sind Emulgatoren zur Verteilung von Flüssigkeit in anderen Flüssigkeiten zu unterscheiden.

Die US 5,143,952 beschreibt z. B. Mittel zur Herstellung von Wasser-in-Öl-Emulsionen, die durch die Umsetzung von linearen Polyaminen mit Carbonsäuren und nachfolgender Versalzung der Amidgruppen enthaltenden Amine mit organischen Sulfonsäuren oder organischen sauren Phosphaten erhalten werden. Die US 3,298,912 beschreibt ebenfalls Emulgatoren auf Basis von Umsetzungsprodukten zwischen oxyalkylierten Polyaminen und Alkylbenzensulfonsäuren.

Eine Vielzahl verschiedener Substanzen findet heute Verwendung als Dispergiermittel für Pigmente und Füllstoffe. Ein Überblick über vorhandene Patentliteratur findet sich in EP 0 318 999 (Seite 2, Zeile 24-26). Neben sehr einfachen, niedermolekularen Verbindungen wie z.B. Lecithin, Fettsäuren und deren Salzen und Alkylphenolethoxylaten werden auch komplexe Strukturen als Dispergiermittel eingesetzt. Hier sind es speziell amino- und amidfunktionelle Systeme, die breite Verwendung innerhalb der Dispergiermittel einnehmen. Im GB 2 153 804 werden z.B. amino- und amidfunktionelle Poly- und Oligocopolymere auf der Basis von Polyaminen und Polycaprolactonen zur Dispergierung von magnetischen Pigmenten eingesetzt. Das EP 0 713 894 beschreibt die Verwendung von aminofunktionellen Polylactonen für Überzüge und Druckfarben. Weiterhin werden aminfunktionelle Polyacrylate (EP 0 311 157, US-PS 3 980 602) zur Stabilisierung von organischen und anorganischen Pigmenten eingesetzt. Eine weitere Gruppe stellen aminfunktionelle Polymere auf der Basis von Polyisocyanaten dar (EP 0 159 678, EP 0 438 836).

Auch Derivate von Phosphorsäureestern werden häufig als Dipergiermittel eingesetzt. Im EP 0 417 490 (Seite 2, Zeile 23 -43) findet sich eine Zusammenfassung über die Verwendung dieser Stoffe, vorzugsweise als Dispergiermittel oder zur Vorbehandlung von Pigmenten. In diesem Patent sind auch die Salze von sauren Phosphorsäureestern beschrieben. Als basische Versalzungskomponenten werden anorganische Basen sowie Mono- und Diamine aufgeführt.

Viele dieser Dispergiermittel zeigen bei ausreichender Pigment- bzw. Feststoffstabilisierung ein unzureichendes Vermögen die Viskosität bei der Einarbeitung von Pigmenten oder Feststoffteilchen in Bindemittel und Pigmentkonzentraten zu erniedrigen. Im Zuge der fortschreitenden Bemühungen umweltverträgliche Systeme zu erzeugen, besteht die Notwendigkeit, die Lösungsmittelmenge soweit wie möglich zu senken (z.B. high-solid und ultra-highsolid Lacke), oder ganz auf Lösungsmittel zu verzichten. Dies führt in der Regel zu Problemen bei der Produktion, da die Viskosität bei der Einarbeitung bzw. Dispergierung der Feststoffpartikel oftmals zu hoch ist. Insbesondere trifft dies auf die Herstellung von Pigmentkonzentraten zu, bei denen ein möglichst hoher Pigmentierungsgrad, bei gleichzeitig geringem Anteil an Bindemittel oder Lösungsmittel, erreicht werden soll.

Pigmentpasten entfalten nur dann ihren vollen Nutzen wenn sie möglichst universell, d.h. in vielen verschiedenen Bindemitteln, die sich in ihrer Polarität oft stark unterscheiden, eingesetzt werden können. Gerade die breite Verträglichkeit der Pigmentpasten ist mit den bislang verwendeten Dispergiermitteln nicht gewährleistet, so dass der Einsatz von Pastensystemen erheblich eingeschränkt ist. Neben dem Einsatz von Pigmentpasten in verschiedenen Bindemitteln muss auch die flockulationsfreie Mischbarkeit der Pasten untereinander, sowie im Bindemittel gewährleistet sein.

Die oben vorgestellten Dispergiermittel stellen oft nur Teillösungen für dieses Problem dar. Aufgrund der Vielzahl der heute verwendeten anorganischen und organischen Pigmente und Füllmaterialien ist eine hinreichende Stabilisierung der zu dispergierenden Feststoffteilchen durch desorptionsstabile Belegung der Oberfläche nicht ausreichend gewährleistet. Somit kommt es zu Agglomerationen, da die notwendige effiziente sterische Abschirmung fehlt.

Der vorliegenden Erfindung liegt daher die Aufgabe zugrunde, die zuvor beschriebenen Nachteile bekannter Dispergiermittel zu beseitigen, d.h. Dispergieradditive zu entwickeln, die bei guter Stabilisierung von Pigmenten oder Füllstoffen die Mahlgutviskosität der Lacke, Pasten oder Kunststofformulierungen so weit senken, dass eine Verarbeitung bei hohem Füllgrad möglich ist. Gleichzeitig muß speziell bei Pigment- und Füllstoffpasten eine breite Verträglichkeit gewährleistet sein, um diese in vielen unterschiedlichen Bindemitteln und Überzugsmaterialien einsetzen zu können. Weiterhin ist es erforderlich, dass die verwendeten erfindungsgemäßen Dispergieradditive eine flockulationsfreie Mischbarkeit der Pasten, bzw. der mit diesen Pasten hergestellten Bindemittel, untereinander ermöglichen.

Überraschenderweise hat es sich gezeigt, dass eine deutliche Verbesserung in der Dispergierung und Stabilisierung von Pigmenten oder Füllstoffteilchen in Bindemitteln, Pigmentpasten oder Kunststoffformulierungen erreicht werden kann, wenn Additive eingesetzt werden, die durch Versalzung von Polyaminen mit Säuren mit organischen Resten hergestellt werden. Weiterhin sind diese Dispergiermittel überraschend breit verträglich und können sowohl in polaren wie auch in unpolaren Bindemittelsystemen eingesetzt werden. Sie senken die Viskosität des Malgutes während der Dispergierung stark und erlauben es daher Formulierungen mit hohem Feststoffanteil herzustellen.

Solche Dispergiermittel für Pigmente und Füllstoffe wurden durch Versalzung einer aminfunktionellen Verbindung mittels einer Säure erhalten,
wobei als aminfunktionelle Verbindung ein Polyamin mit zumindest drei Aminogruppen aus der Gruppe "nicht modifizierte aliphatische lineare Polyamine und/oder nicht modifizierte aliphatische verzweigte Polyamine und/oder modifizierte Polyamine, wobei es sich bei diesen um mit Mono- oder Polyisocyanaten, umgesetzte Polyamine, mit epoxyfunktionellen Stoffen umgesetzte Polyamine, mit cyclischen Carbonaten umgesetzte Polyamine, mittels einer Michael-Reaktion mit α, β-ungesättigten Verbindungen umgesetzte Polyamine, alkylierte und/oder quaternisierte Polyamine und/oder mit Carbonsäuren amidierte verzweigte aliphatische Polyamine handelt, mit der Maßgabe, daß nach der Modifikation noch drei versalzbare Aminogruppen pro Molekül vorhanden sind", oder eine Mischung solcher Polyamine verwendet wird und wobei als Säure mindestens ein Phosphorsäureester der allgemeinen Formel: (OH)₃₋ₙPO(OR¹)ₙ mit n = 1 oder 2, wobei R¹ einen Alkyl-, Aryl- oder Aralkylrest mit mindestens 5 C-Atomen und/oder einen Rest eines oxalkylierten Alkohols mit einem zahlenmittleren Molekulargewicht zwischen 100 und 5000 g/mol und/oder einen Rest mit mindestens einer Carbonsäureestergruppe und/oder einer Urethangrupppe mit einem zahlenmittleren Molekulargewicht zwischen 100 und 5000 g/mol darstellt, verwendet wird.

Darüber hinaus wird die erfindungsgemäße Verwendung eines Dispergiermittels, welches erhältlich ist durch Versalzung einer aminfunktionellen Verbindung mittels einer Säure, wobei als aminfunktionelle Verbindung ein Polyamin mit zumindest drei Aminogruppen aus der Gruppe "nicht modifizierte aliphatische lineare Polyamine und/oder nicht modifizierte aliphatische verzweigte Polyamine und/oder modifizierte Polyamine, wobei es sich bei diesen um mit Mono- oder Polyisocyanaten, umgesetzte Polyamine, mit epoxyfunktionellen Stoffen umgesetzte Polyamine, mit cyclischen Carbonaten umgesetzte Polyamine, mittels einer Michael-Reaktion mit α,β-ungesättigten Verbindungen umgesetzte Polyamine, alkylierte und/oder quaternisierte Polyamine und/oder mit Carbonsäuren amidierte aliphatische Polyamine handelt, mit der Maßgabe, daß nach der Modifikation noch drei versalzbare Aminogruppen pro Molekül vorhanden sind", oder eine Mischung solcher Polyamine verwendet wird und wobei als Säure ein Stoff aus der Gruppe "Phosphorsäureester der allgemeinen Formel: (OH)₃₋ₙPO(OR¹)ₙ mit n = 1 oder 2, Sulfonsäuren der allgemeinen Formel HOSO₂R², saure Schwefelsäureester der allgemeinen Formel HOSO₃R²" wobei R¹ und R² einen Alkyl-, Aryl- oder Aralkylrest mit mindestens 5 C-Atomen und/oder einen Rest eines oxalkylierten Alkohols mit einem zahlenmittleren Molekulargewicht zwischen 100 und 5000 g/mol und/oder einen Rest mit mindestens einer Carbonsäureestergruppe und/oder einer Urethangruppe mit einem zahlenmittleren Molekulargewicht zwischen 100 und 5000 g/mol darstellt, oder eine Mischung solcher Stoffe, wobei R¹ und R² gleich oder verschieden sind, verwendet wird, (A) zur Herstellung von Pigmente und/oder Füllstoffe enthaltenden Lacken, Pasten und/oder Formmassen oder (B) zur Herstellung von dispergierbaren pulverpartikel- und/oder faserpartikelförmigen Feststoffen, insbesondere von dispergierbaren Pigmenten oder Kunststofffüllstoffen, wobei die Partikel mit dem Dispergiermittel beschichtet sind oder (C) zur Herstellung eines Pigmentlacks, wobei ein Lackbindemittel und/oder Lösemittel, Pigmente, das Dispergiermittel, übliche Lackhilfsmittel und gegebenenfalls Füllstoffe miteinander vermischt werden oder (D) zur Herstellung eines pigmentierten Überzugs auf einem Substrat, wobei mit dem Dispergiermittel ein Pigmentlack hergestellt wird, wobei der Pigmentlack auf das Substrat aufgebracht wird und wobei der auf das Substrat aufgebrachte Pigmentlack eingebrannt oder ausgehärtet beziehungsweise vernetzt wird, gelehrt.

Unter Polyaminen sollen in diesem Zusammenhang Stoffe verstanden werden, die mindestens drei Aminogruppen pro Molekül tragen.

Der Rest R^{1,2} in a) und b), der gleich oder verschieden sein kann, ist wesentlicher Bestandteil der erfindungsgemäßen Dispergiermittel und dadurch gekennzeichnet, dass er mindestens einen Ethersauerstoff (-O-) und/oder eine Carbonsäureesterfunktion (-COO-) und/oder eine Urethangruppe (-NHCOO-) enthält und/oder einen Alkyl-, Aryl- bzw. Aralkylrest mit mehr als 5-Kohlenstoffatomen. Das zahlenmittlere Molekulargewicht Mₙ der Reste R^{1,2} kann zwischen 100 und 20 000 g/mol betragen, wobei Wasserstoffatome, vor allem solche der aliphatischen Gruppen der Reste R¹,², teilweise durch Halogenatome ersetzt sein können. Der Rest R^{1,2} kann weiterhin Gruppen tragen, die sich bei der Bildung des Versalzungsprodukts inert verhalten wie z.B. die Carbonsäureamidgruppe (-NHCO-), nicht aktivierte Doppelbindungen oder Harnstoffgruppierungen (-NHCONH-). R^{1,2} stellt bevorzugt den Rest eines oxalkylierten, besonders bevorzugt den Rest eines (C₂-C₄)oxalkylierten und/oder carbonsäureesterhaltigen und/oder urethangruppenhaltigen Monoalkohols dar. Das Molekulargewicht eines solchen Restes R^{1,2} liegt bevorzugt im Bereich von 100 - 5000 g/mol, da sich Produkte mit kleinerem oder höheren Molekulargewicht als weniger wirksam erwiesen haben. Außerdem sind Reste mit höherem Molekulargewicht nur schwer herstellbar und kommerziell meist nicht erhältlich. Besonders bevorzugt sind Molekulargewichte der Reste R^{1,2} die im Bereich zwischen 300 und 2500 g/mol, da sich Produkte mit Resten, die in diesem Molekulargewichtsbereich bewegen, unschwer herstellen und verarbeiten lassen und über ausgezeichnete Wirksamkeit verfügen. Ganz besonders bevorzugt sind Phosphorsäureester deren Rest R¹ einen oxalkylierten oder carbonsäureesterhaltigen Monoalkohol oder einen oxalkylierten-carbonsäureesterhaltigen Monoalkohol mit einem mittleren Molekulargewicht im Bereich von 300 - 2500 g/mol darstellt.

Durch die Wahl der Reste R^{1,2} wird eine angepasste Verträglichkeit des Dispergieradditivs mit verschiedensten Bindemitteln gewährleistet. Bei gemischt oxalkylierten-carbonsäureesterhaltigen Resten R^{1,2} liegt das Verhältnis von Ethersauerstoffen zu Carbonsäureestergruppen zwischen 1:20 und 20:1. Bevorzugt liegt das Verhältnis im Bereich zwischen 1:10 und 10:1; besonders bevorzugt liegt das Verhältnis zwischen 1:5 und 5:1, da Reste R^{1,2},die solcherart aufgebaut sind, eine besonders breite Verträglichkeit der erfindungsgemäßen Produkte gewährleisten. Das Molekulargewicht eines Rests R^{1,2} liegt bevorzugt im Bereich von 200 bis 5000 g/mol; besonders bevorzugt im Bereich zwischen 300 und 2500 g/mol. Auch für die oxalkylierten-carbonsäureesterhaltigen Reste R^{1,2} gelten die oben aufgeführten Gründe für die Wahl der Molekulargewichtsbereiche.

Als schwefelhaltige Versalzungskomponenten können z.B. lineare und nicht lineare Alkylarylsulfonsäuren wie z.B. Dodecylbenzolsulfonsäure, Dodecylnaphthylsulfonsäure und die durch Veresterung von Monohydroxyverbindungen mit konzentrierter Schwefelsäure leicht zugänglichen Alkylsulfate eingesetzt werden.

Als Monohydroxyverbindung (HO-R^{1,2}) zur Bildung der Phosphorsäureester und Schwefelsäureester können Alkyl-, Aryl- oder Aralkylmonoalkohole eingesetzt werden, die mehr als 5 Kohlenstoffatome in der Kette tragen, also z,B. Cyclohexanol, Fettalkohole, Alkylphenole, Alkylnaphthole und Phenylethanol sowie monohydroxyfunktinelle Polybutadiene, Polypropylene oder Polystyrole. Als Monohydroxyverbindungen können bevorzugt solche eingesetzt werden, die mindestens ein Ethersauerstoffatom (-O-) und/oder eine Carbonsäureestergruppe (-COO-) und/oder eine Urethangruppe (-NHCOO-) enthalten. Es handelt sich also um Polyether wie beispielsweise Ethylenoxyd- und/oder Propylenoxyd-(Co)polymerisate und/oder gemischte Polyether-Polyester wie sie beispielsweise durch die Polymerisation eines Lactons (z.B. Propiolacton, Valerolacton, Caprolacton) mit einem Monohydroxypolyether, oder durch Kondensation von Hydroxycarbonsäuren in Anwesenheit von Monohydroxypolyethern erhältlich sind. Die gemischten Polyether und gemischten Polyether-Polyester können in Blockstruktur (z.B. Poly(ethylenoxydblock-propylenoxyd-block-∈-caprolacton) oder auch statistisch angeordnet sein.

Unter den oben aufgezählten Monohydroxyverbindungen werden bevorzugt die polyesterhaltigen Alkohole zur Bildung der Phosphorsäureester eingesetzt. Besonders bevorzugt werden die gemischt ethoxilierten und/oder propoxilierten polyesterhaltigen Monohydroxyverbindungen sowie die ethoxilierten und/oder propoxilierten Monohydroxyverbindungen eingesetzt.

Neben den Monohydroxyverbindungen (HO-R^{1,2}) können auch zu gewissen Anteilen Dihydroxyverbindungen (HO-R^{1,2}-OH) zur Bildung der Phosphorsäure- und Schwefelsäureester eingesetzt werden. Ebenso können in gewissen Anteilen auch Disulfonsäuren eingesetzt werden. Aufgrund der koflockulierenden Wirkung solcher dimeren Phosphorsäure- und Schwefelsäureester, sowie der Disulfonsäuren kann sich speziell die Lagerstabilität (Antiabsetzverhalten) der mit diesen Verbindungen hergestellten Formulierungen erhöhen.

Sämtliche als saure Versalzungskomponenten eingesetzte Verbindungen können in den organischen Resten auch andere Gruppen tragen, die sich bei der nachfolgenden Versalzung inert verhalten.

Die Synthese der erfindungsgemäßen Phosphorsäureester, die zur Versalzung des Polyamins eingesetzt werden, ist beispielhaft in Houben-Weyl "Methoden der organischen Chemie" Band XII/2, 4. Auflage, S. 143 ff. beschrieben. Je nach Art des eingesetzten Phosphorylierungsreagenzes (z.B. P₂O₅, PCl₅, Polyphosphorsäure (PPS) und nach der stöchiometrischen Einsatzmenge von Phosphorylierungsreagenz zu phosphorylierender Komponente (R¹OH) bilden sich Mono- oder Diester oder auch Gemische aus beiden Spezies. Es ist auch möglich, dass bei der Phosphorylierungsreaktion ein Gemisch verschiedener zu phosphorylierender Komponenten eingesetzt wird.

Wie dem Fachmann bekannt ist, können sich beim Einsatz höher kondensierter Polyphosphorsäuren neben den Phosphorsäureestern in wechselnden Anteilen auch Polyphosphorsäureester bilden. Unter dem Einfluss von Wasser, das häufig als Hydrathülle Pigmente und Feststoffe umgibt, zerfallen jedoch die Polyphosphorsäureester unter Bildung der erfindungsgemäßen Phosphorsäureester.

Die sauren Schwefelsäureester und die Sulfonsäuren, die in den erfindungsgemäßen Verwendungen einsetzbar sind, werden nach allgemein bekannten Verfahren hergestellt.

Als Versalzungsgrad (darunter soll in diesem Zusammenhang das Verhältnis zwischen Säureäquivalenten zu Aminäquivalenten verstanden werden) werden bevorzugt Werte zwischen 0,02 und 1 eingestellt, besonders bevorzugt Werte zwischen 0,1 und 1 und ganz besonders bevorzugt Werte zwischen 0,5 und 1, da die letztgenannten Produkte die breiteste Verwendbarkeit für verschiedene Bindemittel und Feststoffe besitzen. Der Versalzungsgrad muß so gewählt werden, dass pro Molekül mindestens eine Aminogruppe versalzt ist.

Je nach verwendetem Feststoff, der zu dispergieren ist, können Produkte mit hohem oder mit niedrigen Versalzungsgrad eingesetzt werden. So lassen sich z.B. bei der Dispergierung von sauren Rußsorten Versalzungskomponenten mit ausgezeichneter Dispergierqualität einsetzen, die einen hohen Überschuss an basischen Gruppen tragen, bei denen also das Polyamin nicht vollständig mit der entsprechenden Säure versalzt ist. Neben den Produkten die nicht vollständig versalzt wurden ist es durchaus sinnvoll für bestimmte Anwendungen auch Produkte einzusetzen, die bezogen auf das Aminäquivalent einen Säureüberschuss tragen, so z.B. wenn Feststoffe zur Dispergierung eingesetzt werden, die selbst basisch sind. Beispiele für die bei den Versalzungsreaktionen eingesetzten Polyamin-Komponenten sind: aliphatische Amine mit mindestens drei primären und/oder sekundären und/oder tertiären Aminogruppen. Bevorzugt werden aliphatische lineare Polyamine mit primären und sekundären Aminogruppen wie Diethylentriamin (DETA), Triethylentetramin (TETA) Tetraethylenpentamin (TEPA) Pentaethylenhexamin, Hexaethylenheptamin und höhere Homologe eingesetzt. Besonders bevorzugt werden aliphatische verzweigte Polyamine, insbesondere (C₂-C₄)-alkylenamine, mit primären, sekundären und tertiären Aminogruppen und Molekulargewichten von 800 - 1000000 g/mol wie z.B. die Lupasol® Typen der Fa. BASF, die Epomin® Typen der Fa. Nippon Shokubai eingesetzt. Diese verzweigten aliphatischen Polyamine, die auch unter dem Namen Polyimine oder Aziridinhomopolymere bekannt sind, werden nach bekannten Verfahren, z.B. durch die Polymerisation von Ethylenimin, hergestellt. Unter diesen aliphatischen verzweigten Polyaminen wurden bevorzugt Typen mit einem mittleren MW von ca. 600 - 200000 g/mol, besonders bevorzugt Typen mit einem mittleren MW von ca. 1000 40000 g/mol eingesetzt, da sich deren Versalzungsprodukte als besonders wirkungsvoll erwiesen. Die Protonen am Stickstoff dieser Verbindungen können dabei vorzugsweise gegen Alkyl-, Arylund/oder Aralkylgruppen ausgetauscht sein und/oder quaternisiert vorliegen. Die oben beschriebenen Aziridinhomopolymere sind auch als alkoxylierte Varianten erhältlich, in denen Protonen an den primären oder sekundären Stickstoffatomen ganz oder teilweise beispielsweise durch Ethylenoxid- und/oder Propylenoxideinheiten ersetzt sind.
Weiterhin sind auch Dendrimere mit basischen Gruppen wie beispielsweise die Astramol®Typen der Fa. DSM geeignet, als Polyaminkomponenten zu fungieren.

Neben den nicht modifizierten Polyaminen können auch teilweise modifizierte Polyamine zur Versalzung eingesetzt werden. Bei diesen substituierten Polyaminen kann es sich z. B. um Kondensate der aliphatisch verzweigten Polyamine mit Carbonsäuren wie z.B. Stearinsäure, Ölsäure oder Tallölfettsäure handeln, die über Amidgruppierungen mit dem Polyamin verbunden sind. Weiterhin ist es auch möglich Teile des primären oder sekundären Polyamins mit Monoisocyanaten wie z.B. Stearylisocyanat und/oder Polyisocyanaten mit n-NCO-Gruppen, von denen (n-1) NCO-Gruppen vorher mit anderen Reaktanden reagiert haben, umzusetzen. Weiterhin ist es möglich Polyamine zu versalzen, die vorher mit epoxifunktionellen Stoffen, und/oder cyclischen Carbonaten reagiert haben. Es ist auch möglich Polyamine einzusetzen, die vorher mehrere der oben beschriebenen Reaktionen durchlaufen haben, oder teilweise mit Alkylierungsmitteln quarternisiert sind.
Eine besonders bevorzugte Ausführungsform der substituierten Polyamine stellen Additionsprodukte dar, die durch Umsetzung von vinylogen Verbindungen mit primären und sekundären Aminogruppen der Polyamine im Sinne einer Michael-Reaktion entstehen und dann versalzt werden. Der Vorteil der Michael-Reaktion besteht darin, dass sich die Zahl der Aminogruppen der Polyamine während der Reaktion nicht ändert. Alle Aminogruppen stehen auch weiterhin für die nachfolgende Versalzung zur Verfügung. Die hohe Ionendichte der auf diese Weise substituierten und dann versalzenen Verbindungen hat sich als besonders vorteilhaft für ihr Dispergiervermögen erwiesen. Als vinyloge Verbindung in der Michael-Reaktion können z.B. α,β-ungesättigte Carbonylverbindungen wie α,β-ungesättigte Carbonsäureester oder α,β-ungesättigte Nitrile eingesetzt werden. Bevorzugte Ausführungsformen dieser Michael-Addukte sind Reaktionsprodukte zwischen Polyaminen und Acrylsäure- und/oder Methacrylsäureestern mit aliphatischen, aromatischen und/oder aralkylischen Resten wie z.B. Methyl(meth)acrylat, Butyl(meth)acrylat, Ethylhexyl(meth)acrylat, Lauryl(meth)acrylat, Stearyl(meth)-acrylat, Benzyl(meth)acrylat; ethoxylierte und/oder propoxylierte (Meth)acrylate sowie hydroxyfunktionelle (Meth)acrylate wie Hydroxyethyl(meth)acrylat und Hydroxypropyl(meth)acrylat. Bevorzugt werden die jeweiligen Acrylsäurederivate umgesetzt. Weitere geeignete α,β-ungesättigte Verbindungen sind Maleinsäure- und Itaconsäureester wie z.B. Diethylmaleinat oder Dibutylmaleinat sowie α,β-ungesättigte Phosphonsäuren wie z.B. Vinylphosphonsäure. Bei den Michael-Addukten können 5 - 100 % der primären und sekundären Aminogruppen dieser Reaktion unterworfen werden. Bevorzugt werden 15 - 85 %, besonders bevorzugt werden 25 - 75 % der primären und sekundären Aminogruppen umgesetzt. Allgemein gilt, daß bevorzugt ein Polyamin, bei welchem 0,5 bis 90 Mol% (bezogen auf die primären und sekundären Aminogruppen) vorzugsweise 1 bis 50 Mol%, der primären und/oder sekundären Aminogruppen vor, während oder nach der Versalzung mit Carbonsäuren unter Amidbildung, mit Isocyanaten unter Harnstoffbildung und/oder mit Epoxiden unter Bildung von α-Amino-β-Hydroxyverbindungen und/oder mit α,β-ungesättigten Verbindungen im Sinne einer Michael-Addition umgesetzt wird, oder eine Mischung solcher Amine verwendet wird.

Für alle substituierten Polyamine gilt, das nach der Modifizierung noch mindestens drei versalzungsfähige Aminogruppen vorhanden sein müssen.

Eine weitere Klasse von Polyaminen, die sich zur Versalzung mit den oben beschriebenen Säuren eignen, sind Homo-, Co- oder Blockcopolymere mit mindestens drei Aminogruppen, die sich entweder durch radikalische oder ionische Polymerisationen herstellen lassen, oder mittels einer polymeranalogen Reaktion an einem bereits vorgebildeten Polymer gebildet oder in ein solches eingefügt werden. Beispielhaft seien Polymere genannt, die als basische Gruppe z.B. die einpolymerisierten Monomere Dimethylaminoethyl(meth)acrylat, N-tert-Butylaminoethyl(meth)acrylat, Vinylpyridin, Vinylpiperidin oder Vinylimidazol tragen. Derartige Mono-, Co- oder Blockcopolymerisate besitzen ein zahlenmittleres Molekulargewicht bis zu 1000000 g/mol, vorzugsweise von 600 - 200000 g/mol. Besagte Polyamine lassen sich einzeln oder in Mischung einsetzen.

Speziell durch den Einsatz der Polyamine als Versalzungskomponente konnten Dispergiermittel hergestellt werden, die sehr breit verträglich sind und sich so in ihrer Verwendungsmöglichkeit deutlich von den Strukturen abheben, die sich bei der Versalzung von Mono- oder Diaminen ergeben.

Der Einsatz der erfindungsgemäßen Dispergiermittel kann gemäß dem Stand der Technik für bekannte Dispergiermittel erfolgen. So können diese z.B. bei der Herstellung von Pigmente und/oder Füllstoffe enthaltenden Lacken, Pasten und/oder Formmassen eingesetzt werden. Beispielsweise lassen sich die Dispergiermittel zur Herstellung eines Pigmentlacks, wobei ein Lackbindemittel und/oder Lösemittel, Pigmente und gegebenenfalls Füllstoffe das Dispergiermittel und übliche Hilfsstoffe vermischt werden, verwenden. Gegenstand der Erfindung ist letzlich auch die Verwendung eines derartigen Dispergiermittels zur Herstellung eines pigmentierten Überzuges auf einem Substrat, wobei der Pigmentlack auf das Substrat aufgebracht wird und wobei der auf das Substrat aufgebrachte Pigmentlack eingebrannt oder ausgehärtet bzw. vernetzt wird. Die Dispergiermittel können alleine oder zusammen mit nicht funktionsgebundenen Bindemitteln eingesetzt werden. Beim Einsatz in Polyolefinen kann es z.B. vorteilhaft sein, entsprechende niedermolekulare Polyolefine als Trägermaterialien zusammen mit dem Dispergiermittel einzusetzen. Eine erfindungsgemäße Verwendung der Dispergiermittel besteht auch in der Herstellung dispergierbarer pulverpartikel- und/oder faserpartikelförmiger Feststoffe, insbesondere von dispergierbaren Pigmenten oder Kunststofffüllstoffen, wobei die Partikel mit dem Dispergiermittel beschichtet sind. Derartige Beschichtungen von organischen wie auch anorganischen Feststoffen werden in bekannter Weise ausgeführt, wie sie z.B. in EP-A-0 270 126 beschrieben werden. Hierbei kann das Lösungs- oder Emulsionsmittel entweder entfernt werden oder im Gemisch unter Bildung von Pasten verbleiben. Diese Pasten sind übliche Handelsprodukte und können zusätzlich Bindemittelanteile sowie weitere Hilfs- und Zusatzstoffe enthalten. Speziell bei Pigmenten kann die Beschichtung der Pigmentoberfläche während oder nach der Synthese der Pigmente erfolgen z.B. durch Zusatz der erfindungsgemäßen Versalzungsprodukte zur Pigmentsuspension oder während oder nach dem Pigmentfinish.

Die auf diese Weise vorbehandelten Pigmente zeichnen sich durch leichtere Einarbeitbarkeit im Bindemittel sowie durch verbessertes Viskositäts-, Flockulationsund Glanzverhalten gegenüber nicht behandelten Pigmenten aus.

Neben der oben beschriebenen Anwendung als Beschichtungsmittel für pulver- und faserförmige Feststoffe können die erfindungsgemäßen Dispergiermittel auch als Viskositätsreduzierer und Kompatibilisatoren in Kunstharzen eingesetzt werden. Beispiel für solche Kunstharze sind die sogenannten "sheet molding compounds" (SMC) und "bulk molding compounds" (BMC), die aus stark füllstoff- und faserhaltigen ungesättigten Polyesterharzen bestehen. Ihre Herstellung und Verarbeitung ist beispielhaft in DE-A-36 43007 beschrieben. Um eine hohe Steifigkeit, eine gute Oberflächenqualität und flammhemmende Eigenschaften (bei Füllstoffen wie z.B. Al(OH)₃ oder Mg(OH)₂) zu erhalten, ist es notwendig diese Systeme hoch mit Füllstoffen und Fasern zu füllen, was zu einem starken Viskositätsanstieg der SMC und BMC-Mischungen und zu Problemen bei der Benetzung der Fasern führt. Ein weiteres Problem bei SMC- und BMC-Kunstharzmischungen besteht darin, dass oftmals Polystyrol (PS) der Formulierung zugesetzt wird, um die Schrumpfung während des Verarbeitungsprozesses zu reduzieren. PS ist nicht verträglich mit den verwendeten ungesättigten Polyesterharzen und es kommt zur Separation der Komponenten. Durch den Einsatz der erfindungsgemäßen Salze ist es möglich die Viskosität der Harz/Füllstoff-Gemische stark zu senken, so dass ein höherer Füllgrad möglich ist, der sowohl die mechanischen Eigenschaften, die Oberflächenbeschaffenheit und bei Verwendung von Al(OH)₃ oder Mg(OH)₂ die flammhemmende Wirkung positiv beeinflusst. Bei Verwendung von PS-gefüllten SMC- oder BMC-Mischungen können die erfindungsgemäßen Additive aufgrund ihrer guten Dispergierqualitäten eine Kompatibilisierung zwischen PS und ungesättigtem Polyesterharz herbeiführen, wodurch sich die Lagerstabilität und Verarbeitungssicherheit solcher Mischungen erhöht.

Die erfindungsgemäßen Dispergiermittel werden im allgemeinen in einer Menge von 0,5 bis 100 Gew. %, bezogen auf den zu dispergierenden Feststoff, eingesetzt. Zur Dispergierung spezieller Feststoffe können aber durchaus wesentlich höhere Mengen der Dispergiermittel notwendig sein.

Die Menge an Dispergiermittel ist im wesentlichen abhängig von der zu belegenden Oberfläche des zu dispergierenden Feststoffes. Ruß benötigt z.B. wesentlich größere Mengen an Dispergiermittel als z.B. TiO₂. Beispiele für Pigmente oder Füllstoffe finden sich in EP-A-0 270 126. Weitere Beispiele sind Neuentwicklungen besonders im Bereich der organischen Pigmente wie z.B. die Klasse der Diketo-pyrrolo-pyrrole, aber auch magnetische Pigmente z.B. auf Basis von Reineisen oder Mischoxyden.

Desweiteren lassen sich auch mineralische Füllstoffe, z.B. Calciumcarbonat, Calciumoxid aber auch Flammschutzmittel wie z.B. Aluminium- oder Magnesiumhydroxid dispergieren. Mattierungsmittel wie z.B. Kieselsäuren lassen sich ebenfalls hervorragend dispergieren und stabilisieren.

Die Erfindung betrifft darüber hinaus auch ein Verfahren zur Herstellung eines Dispergiermittels,
wobei eine aminfunktionelle Verbindung mit zumindest drei Aminogruppen aus der Gruppe "aliphatische lineare Polyamine und/oder aliphatische verzweigte Polyamine und/oder modifizierte Polyamine, wobei es sich bei diesen um mit Mono- oder Polyisocyanaten, umgesetzte Polyamine, mit epoxyfunktionellen Stoffen umgesetzte Polyamine, mit cyclischen Carbonaten umgesetzte Polyamine, mittels einer Michael-Reaktion mit α,β-ungesättigten Verbindungen umgesetzte Polyamine, alkylierte und/oder quaternisierte Polyamine und/oder mit Carbonsäuren amidierte verzweigte aliphatische Polyamine handelt, mit der Maßgabe, daß nach der Modifikation noch drei versalzbare Aminogruppen pro Molekül vorhanden sind", oder eine Mischung solcher Polyamine und eine Säure aus der Gruppe "Phosphorsäureester der allgemeinen Formel: (OH)₃₋ₙ PO(OR¹)ₙ mit n = 1 oder 2, wobei R¹ einen Alkyl-, Aryl- oder Aralkylrest mit mindestens 5 C-Atomen und/oder einen Rest eines oxalkylierten Alkohols mit einem zahlenmittleren Molekulargewicht zwischen 100 und 5000 g/mol und/oder einen Rest mit mindestens einer Carbonsäureestergruppe und/oder einer Urethangruppe mit einem zahlenmittleren Molekulargewicht zwischen 100 und 5000 g/mol darstellt, oder eine Mischung solcher Stoffe, miteinander in einer Versalzungsreaktion umgesetzt werden.

### 1. Herstellungsbeispiele:

Die Erfindung wird durch nachfolgende Beispiele zusätzlich erläutert. Bei molekular uneinheitlichen Substanzen stellen die angegebenen Molekulargewichte Durchschnittswerte des Zahlenmittels dar. Sofern nicht anders ausgeführt handelt es sich bei Teilen um Gewichtsteile und bei Prozenten um Gewichtsprozente.

Folgende Abkürzungen wurden in den Herstellungsbeispielen verwendet:

| | |
|---|---|
| TETA | Triethylentetramin |
| PMA | Propylenglycolmonomethyletheracetat |
| DDBSS | Dodecylbenzolsulfonsäure |
| BG | Butylglycol |
| PM | Propylenglycolmonomethylether |

### Herstellung der Versalzungsprodukte

Unter die erfindungsgemäßen Versalzungsprodukte fallen die Produkte der Beispiele 5-16, 18, 19, 21 und 23-28. Diese erfindungsgemäßen Produkte können wie auch die Produkte der Beispiele 1-4, 20 und 22 in den erfindungsgemäßen Verwendungen eingesetzt werden.

### Beispiel 1:

10 Teile Triethylentetramin (TETA) werden in einer Mischung aus 30 Teilen i-Butanol und 10 Teilen Propylenglycolmonomethyletheracetat (PMA) klar gelöst. Die Reaktionsmischung wird auf 50°C erwärmt und langsam mit 49,5 Teilen Dodecylbenzolsulfonsäure (DDBSS) (Reworyl K der Fa. Rewo Chem. Group) versetzt. Man erhält eine klare gelbbraune Reaktionslösung.

### Beispiel 2:

10 Teile TETA in 10 Teilen Butylglykol (BG) werden analog Beispiel 1 mit einer Mischung aus 40 Teilen DDBSS und 20 Teilen eines monocarbonsäurefunktionellen Oktanolethoxylates (Akypo OP 80 der Firma Chemy) in einer Lösungsmittelmischung aus 20 Teilen i-Butanol und 40 Teilen PMA umgesetzt. Man erhält eine klare gelbbraune Reaktionslösung.

### Beispiel 3 und 4

Analog Beispiel 1 wurden weitere Amine mit Sulfonsäuren umgesetzt. In Tabelle 1 sind diese Versuche zusammengefasst:

**Tabelle 1**

| **Beispiel Nr.** | **Menge eingesetztes Amin** | **Menge eingesetzter Säure** | **Menge Lösungsmittel bzw.** **Lösungsmittelmischung** |
|---|---|---|---|
| Beispiel 3 | 18 Teile Polyamin¹ | 51 Teile DDBSS | 25 Teile BG + 44 Teile PMA |
| Beispiel 4 | 18 Teile Polyamin¹ | 51 Teile DDBSS + 25 Teile Tallölfettsäure | 31 Teile BG + 63 Teile PMA |

| | | | |
|---|---|---|---|
| ¹ bei dem in Beispiel 3 und 4 verwendeten Polyamin handelt es sich um das verzweigte aliphatische Aziridinhomopolymer: Epomin® SP012, einem Verkaufsprodukt von Nippon Shokubai Co. Ltd. | | | |

### Beispiel 5:

12,5 Teile TETA werden in 50 Teilen BG und 20 Teilen Xylol gelöst. Zu der auf 80°C aufgeheizten Reaktionsmischung wird eine Mischung aus 105,5 Teilen eines Phosphorsäuremonoesters mit einem Nonylphenolethoxylat als Rest R¹ (Gesamtmolekulargewicht ∼ 800 g/mol mit geringen Anteilen des entsprechenden Phosphorsäurediesters) (Phosphorsäureester A) in 48 Teilen PMA innerhalb von 30 min zugetropft. Die Reaktionsmischung wird nachfolgend 15 min bei 80°C gerührt. Man erhält eine klare gelbbraune Reaktionslösung.

### Beispiel 6 - 16:

Analog Beispiel 8 wurden weitere Amine mit verschiedenen Phosphorsäureestern versalzen. In Tabelle 2 sind diese Versuche zusammengefasst:

**Tabelle 2**

| **Beispiel Nr.** | **Menge eingesetztes Amin** | **Menge eingesetzter** **Phosphorsäureester** | **Menge Lösungsmittel bzw.** **Lösungsmittelmischung** |
|---|---|---|---|
| Beispiel 6 | 12 Teile TETA | 122 Teile Phosphorsäureester A | 30 Teile i-Butanol + 25 Teile PMA |
| Beispiel 7 | 10 Teile Polyamin¹ | 80 Teile Phosphorsäureester A | 50 Teile i-Butanol + 40 Teile Butylacetat |
| Beispiel 8 | 10,5 Teile Polyamin¹ | 42 Teile Phosphorsäureester A | 27,5 Teile i-Butanol + 25 Teile Butylacetat |
| Beispiel 9 | 5 Teile TETA | 55 Teile Phosphorsäureester B | 10 Teile i-Butanol + 50 Teile Xylol |
| Beispiel 10 | 8 Teile Polyamin¹ | 68 Teile Phosphorsäureester B | 20 Teile i-Butanol +g 56 Teile Xylol |
| Beispiel 11 | 10 Teile Polyamin² | 68 Teile Phosphorsäureester 2 | 78 Teile BG |
| Beispiel 12 | 7 Teile Polyamin¹ | 67 Teile Phosphorsäureester C | 33 Teile PMA + 33 Teile Xylol + 33 Teile i-Butanol |
| Beispiel 13 | 10 Teile TETA | 67 Teile Phosphorsäureester D | 44 Teile PMA + 33 Teile i-Butanol |
| Beispiel 14 | 18 Teile Polyamin³ | 85 Teile Phosphorsäureester D | 25 Teile PMA + 78 Teile BG |
| Beispiel 15 | 18 Teile Polyamin² | 173 Teile Phosphorsäureester B | 192 Teile BG |

| | | | |
|---|---|---|---|
| ¹ bei dem in Beispiel 7, 8, 10, und 12 verwendeten Polyamin handelt es sich um das verzweigte aliphatische Aziridinhomopolymer: Epomin®SP012, einem Verkaufsprodukt von Nippon Shokubai Co. Ltd. | | | |
| ² bei dem in Beispiel 11, 13, 15, und 16 verwendeten Polyamin handelt es sich um das verzweigte aliphatische Aziridinhomopolymer: Epomin® SP200 einem Verkaufsprodukt von Nippon Shokubai Co. Ltd. | | | |
| ³ bei dem in Beispiel 14 verwendeten Polyamin handelt es sich um das verzweigte aliphatische Aziridinhomopolymer: Lupasol® WF einem Verkaufsprodukt von BASF. | | | |

### Phosphorsäureester A: Phosphorsäureester aus Beispiel 5

Phosphorsäureester B: Phosphorsäuremonoester (mit geringen Anteilen an Phosphorsäurediester) nach allgemeiner Formel (1) mit R¹ = Butoxypoly(ethylenglycol-co-propylenglycol) (Mₙ: 1000 g/mol)
Phosphorsäureester C: Phosphorsäuremonoester (mit geringen Anteilen an Phosphorsäurediester) nach allgemeiner Formel (1) mit R' = Methoxypolyethylenglycol (Mn: 350 g/mol) gestarteter Caprolactonpolyester mit einem Gesamtmolekulargewicht von 900 g/mol
Phosphorsäureester D: Phosphorsäuremonoester (mit geringen Anteilen an Phosphorsäurediester) nach allgemeiner Formel (1) mit R¹ = Butoxypolypropylenglycol (Mn: 750 g/mol)

### Vorprodukt 16:

Eine Mischung aus 35,5 Teilen des in Beispiel 11 verwendeten Polyethylenamins mit 55 Teilen Tallöfettsäure in 100 Teilen Xylol werden am Wasserabscheider so lange gekocht, bis die Wasserentwicklung aufhört (ca. 2h). Die Aminzahl (AZ) des so erhaltenen braunen niederviskosen Produktes beträgt 132.

### Beispiel 16:

Zu einer auf 60°C erwärmten Mischung aus 40,8 Teilen des Vorprodukts 16 mit 40,8 Teilen Butylglycol werden innerhalb von 30 min 36,4 Teile Phosphorsäureester B zugetropft. Nach der Zugabe wird 30 min bei 80°C gerührt. Man erhält eine klare niederviskose braune Reaktionsmischung.

### Vorprodukt 17:

15,8 Teile Tallölfettsäure werden mit 30 Teilen des in Beispiel 19 verwendeten Polyimins in 45,8 Teilen Xylol gelöst. Dann wird 1h bei 100°C gerührt, wobei die Reaktionsmischung leicht trüb wird. Das Reaktionsgemisch wird dann am Wasserabscheider einer azeotropen Destillation unterworfen, bis die Wasserentwicklung beendet ist. Nachfolgend werden 22,8 Teile Xylol aus der Reaktionsmischung entfernt. Man erhält eine klare, gelbbraune Lösung.

### Beispiele 18, 19

Analog Beispiel 16 wird das Vorprodukt 17 mit verschiedenen Phosphorsäureestern einer Versalzungsreaktion unterworfen. In Tabelle 3 sind diese Versuche zusammengefasst:

**Tabelle 3**

| **Beispiel Nr.** | **Menge eingesetztes Amin** | **Menge eingesetzter** **Phosphorsäureester** | **Menge Lösungsmittel bzw.** **Lösungsmittelmischung** |
|---|---|---|---|
| Beispiel 18 | 15 Teile Vorprodukt 17 | 39 Teile Phosphorsäureester C | 14 Teile PMA + 10 Teile BG + 65 Teile Xylol |
| Beispiel 19 | 15 Teile Vorprodukt 17 | 39 Teile Phosphorsäureester D | 14 Teile PMA + 33 Teile BG |

### Beispiel 20:

8,5 Teile des Polyethylenamins aus Bsp. 14 werden in 42,5 Teilen BG gelöst und auf 50°C erwärmt. Zu dieser Lösung werden eine Mischung aus 21,2 Teilen des Phosphorsäureesters aus Beispiel 6 und 20,6 Teile DDBSS in 7,2 Teilen PMA innerhalb von 45 min zugetropft. Man erhält eine klare braune Reaktionsmischung.

### Beispiel 21:

8 Teile des Polyethylenamins aus Beispiel 14 werden in 6,5 Teilen BG und 33,4 Teilen Xylol und 12,3 Teilen PMA gelöst und auf 45°C erwärmt. Zu dieser Lösung werden 4,3 Teile Stearylisocyanat (das zur Verflüssigung kurz vor der Reaktion auf 60°C erhitzt wurde) zugetropft. Die Reaktionsmischung wird 1h bei 45°C gehalten. Danach lassen sich keine Isocyanatgruppen mehr nachweisen. Die Mischung wird dann auf 80 °C erhitzt und innerhalb von 15 min mit 35,2 Teilen des Phosphorsäureesters D versetzt. Man erhält eine gelbbraune klare Reaktionsmischung, die in der Kälte zum Auskristallisieren neigt.

### Beispiel 22:

10 Teile des Polyimins aus Beispiel 14 werden in 30 Teilen BG gelöst. Bei 50 °C werden 47,7 Teile Dodecylhydrogensulfat in 27,7 Teilen BG der Reaktionslösung zugetropft. Nach Ende der Zugabe wird die Reaktionslösung noch 1 h bei 50°C gerührt. Es resultiert eine klare braune Reaktionslösung.

### Beispiel 23:

10 Teile des Polyamins aus Beispiel 14 werden in 50 Teilen BG gelöst. Dieser Lösung werden 2,2 Teile Chloressigsäureethylester zugesetzt. Nachfolgend wird die Reaktionslösung unter Schutzgasatmosphäre auf 120°C aufgeheizt und bei dieser Temperatur 1 h gerührt. Es bildet sich eine viskose gelbliche Lösung in der sich mittels Hochdruchflüssigkeitschromatographie kein Chloressigsäureethylester mehr nachweisen läßt. Der auf 50°C abgekühlten Reaktionslösung werden 35,2 Teile Xylol und 73 Teile des Phosphorsäureesters A langsam, unter intensivem Rühren zugesetzt. Man erhält eine klare bis leicht trübe gelbbraune Reaktionslösung.

### Beispiel 24:

12 Teile des Polyimins aus Beispiel 14 werden in 12 Teilen PMA und 1,5 Teilen i-Butanol bei 50°C gelöst. Zu dieser Lösung werden 72 Teile eines C₁₀₋₁₆ Alkylglycidylethers (HAGE-13 R der Chemischen Fabrik Zaltbommel) unter Schutzgasatmosphäre zugetropft. Nachfolgend wird die Reaktionslösung 1 h bei 60°C gerührt, dann auf 100°C aufgeheizt und bei dieser Temperatur weitere 2 h gerührt. Nach dieser Zeit ist der mittels ¹H-NMR ermittelte Gehalt an Epoxygruppen kleiner als 1 %. Es bildet sich eine klare schwach gelbliche Lösung, die sich in der Kälte zu einer milchigen Flüssigkeit honigähnlicher Konsistenz verfestigt. 10 Teile dieser Reaktionslösung werden bei 50°C mit 8,3 Teilen BG verdünnt und nachfolgend mit 9 Teilen Phosphorsäureester A in 9 Teilen Xylol langsam unter Rühren versetzt. Man erhält eine klare gelbbraune Reaktionsmischung.

### Beispiel 25:

In Beispiel 21 wird als Polyaminkomponente ein Copolymer mit aminischen Gruppen verwendet, das mittels radikalischer Polymerisation hergestellt wurde. Das Copolymer enthält 30 Teile Butylmethacrylat, 20 Teile Methylmetharylat, 10 Teile Benzylmethacrylat und 40 Teile Dimethylaminoethylmethacrylat und wird gemäß Standardliteraturverfahren mit Azobisisobutyronitril als Initiator synthetisiert. Das mittlere Molekulargewicht des Copolymeren beträgt 10000 g/mol. 55 Teile einer 66%igen Lösung dieses Polymers in PMA werden mit 14 Teilen des Phosphorsäureesters A in 34 Teilen BG bei 60°C versetzt. Man erhält ein klares viskoses gelbliches Reaktionsprodukt.

### Beispiel 26

40,1 Teile Lupasol 158 (Lupasol® 158 ist ein verzweigtes aliphatisches ethoxvliertes Aziridinpolymer der BASF) werden in 170,4 Teilen PM in der Wärme (80 °C) gelöst. Zu dieser Lösung werden unter gutem Rühren 214,8 Teile des in Beispiel 12 verwendeten Phosphorsäureesters C zugetropft. Man erhält ein klares gelbes Reaktionsprodukt.

### Beispiel 27

20,2 Teile Lupasol 143 (Lupasol® 143 ist ein verzweigtes aliphatisches ethoxyliertes Aziridinpolymer der BASF) werden in 170,2 Teilen PMA in der Wärme (80 °C) gelöst. Zu der auf 40 °C abgekühlten Lösung werden unter gutem Rühren 40 Teile Phenylisocyanat so zugetropft, so daß die Temperatur 45 °C nicht überschreitet. Nach dem Zudosieren wird die Reaktionsmischung bei 80 °C 1h gerührt. Nach dieser Zeit ist der Isocyanatgehalt der Reaktionslösung auf < 0,5 % gesunken. Dann werden der Reaktionsmischung 110 Teile des in Beispiel 5 verwendeten Phosphorsäureesters A zugesetzt. Man erhält ein klares gelbes Reaktionsprodukt.

### Vorprodukt 28:

In Beispiel 28 wird die Herstellung eines Michaeladdukts beschrieben. In 15 Teile Butylacetat und 10 Teile Propylenglycolmonomethylether (PM) werden 25 Teile des Polyamins Lupasol® PR 8515 (verzweigtes aliphatisches Aziridinhomopolymer der Fa. BASF, MG: ca. 2000 g/mol) gelöst. Bei RT werden 44,8 Teile n-Butylacrylat, in dem 0,035 Teile 3,5-Di-tert.-butyl-4-hydroxytoluol gelöst sind, innerhalb von 2 Std. zudosiert. Die Temperatur der exotherm verlaufende Reaktion wird dabei unterhalb von 40° C gehalten. Nach beendeter Zugabe werden weitere 2 Std. gerührt. Die Reaktion wird mittels ¹H-NMR - Spektroskopie, anhand des Verschwindens der Signalgruppe der vinylischen Protonen verfolgt. Die Aminverteilung, primär/sekundär/tertiär-Stickstoff, nach erfolgter Additionsreaktion, entspricht den theoretisch zu erwartenden Werten.

### Beispiel 28:

25 Teile des basischen Vorprodukts 28 werden in 25 Teilen PM bei 40 C gelöst. Zu dieser Mischung werden 25 Teile des Phosphorsäureesters B zugetropft. Nach beendeter Zugabe wird 1 h bei 60 °C gerührt. Man erhält eine klare gelbbraune Reaktionslösung.

### Vergleichsbeispiele 29 - 34 (nicht erfindungsgemäß):

Die nachfolgend aufgeführten Vergleichsbeispiele 29 - 34 stellen nicht erfindungsgemäße Salze der aufgeführten Phosphorsäureester bzw. Sulfonsäuren mit Mono- oder Diaminen dar, die gebräuchliche Dispergiermittel darstellen und daher in diesem Bereich den nächstliegenden Stand der Technik darstellen (EP 0 417 490). Mit Hilfe dieser Vergleichsbeispiele wird im nachfolgenden anwendungstechnischen Teil die überlegene Wirksamkeit der erfindungsgemäßen Dispergiermittel verdeutlicht.

### Vergleichsbeispiel 29:

Analog Beispiel 5 werden 12,3 Teile 3-Dimethylaminopropanol-1 in 16,7 Teilen PMA und 33,3 Teilen BG gelöst. Zu der auf 80°C aufgeheizten Reaktionsmischung werden 37,7 Teile DDBSS zugetropft. Die Reaktionsmischung wird nachfolgend 15 min bei 80°C gerührt. Man erhält eine klare gelbbraune Reaktionslösung.

### Vergleichsbeispiel 30-34:

Analog Vergleichsbeispiel 29 wurden weitere Amine mit verschiedenen Phosphorsäureestern versalzen. In Tabelle 5 sind diese Versuche zusammengefasst:

**Tabelle 5**

| **Vgl.Bsp. Nr.** | **Menge eingesetztes Amin** | **Menge eingesetzter Säure** | **Menge Lösungsmittel bzw.** **Lösungsmittelmischung** |
|---|---|---|---|
| Vergleichsbeispiel 30 | 12 Teile 3-Dimethylaminopropanol-1 | 38 Teile Phosphorsäureester D | 16,7 Teile PMA + 33,3 Teile BG |
| Vergleichsbeispiel 31 | 9 Teile 3-Dimethylaminopropanol-1 | 41 Teile Phosphorsäureester B | 16,7 Teile PMA + 33,3 Teile BG |
| Vergleichsbeispiel 32 | 10 Teile Dimethylaminopropylamin | 62 Teile DDBSS | 24 Teile PMA + 48 Teile BG |
| Vergleichsbeispiel 33 | 10 Teile Dimethylaminopropylamin | 64 Teile Phosphorsäureester D | 24,7 Teile PMA + 49,3 Teile BG |
| Vergleichsbeispiel 34 | 10 Teile Dimethylaminopropylamin | 91,7 Teile Phosphorsäureester B | 33,9 Teile PMA + 67,8 Teile BG |

### 2. Anwendungstechnische Beispiele

Folgende Abkürzungen wurden in den anwendungstechnischen Beispielen verwendet:

| | |
|---|---|
| PMA | Propylenglycolmonomethyletheracetat |
| DOP | Dioctylphthalat |
| PM | Propylenglycolmonomethylether |
| 2K-System | Zweikomponentensystem |

Zur Prüfung der Wirksamkeit der Dispergiermittel aus Beispielen 1-28 wurden Pigmentpasten mit verschiedenen Versalzungsprodukten von Polyaminen hergestellt. Analog dazu wurden auch Pigmentpasten mit den Produkten aus den nicht erfindungsgemäßen Vergleichsbeispielen 29 - 34 hergestellt.

Zur Herstellung der Pigmentpasten wurden 30g des Rußpigments Spezialschwarz 4 der Fa. Degussa, 46,8g PMA und jeweils 23,2 g der nachfolgend aufgeführten Produkte aus den Beispielen und Vergleichsbeispielen mit 150 g Glasperlen (1 mm Durchmesser) zusammengegeben und mittels einer Polypropylenscheibe von 40 mm Durchmesser bei einer Umfangsgeschwindigkeit von 20 m/s bei 40°C 1 h dispergiert.

Nur bei den Dispergierungen, die mit den erfindungsgemäßen Produkten aus Beispielen 11, 14, 18, 23 und 24 vorgenommen wurden, konnten auf diese Weise fließfähige Pasten mit ausgezeichneten rheologischen Eigenschaften erhalten werden. Die Anreibungen mit den Produkten gemäß der Vergleichsbeispiele 29 - 34 konnten nur vorgenommen werden, wenn dem Mahlgut zusätzliches Lösungsmittel (PMA) zugesetzt wurde. Doch selbst diese Reduktion des Pigmentgehalts des Mahlguts, ergab Pasten, die in ihrer Viskosität teilweise wesentlich höher lagen als die Pasten, die mit den erfindungsgemäßen Additiven aus Beispielen 11, 14, 18, 23 und 24 hergestellt wurden. Die genauen Daten der Viskositätsmessung sind in Tabelle 6 zusammenfaßt.

Dispergierungen von anderen organischen und anorganischen Pigmenten führten zu ähnlichen Ergebnissen wie die Dispergierung des Rußpigments. Die Lagerstabilität der Pasten, die mit den erfindungsgemäßen Additiven aus Beispielen 11, 14, 18, 23 und 24 hergestellt wurden, ist ausgezeichnet.

**Tabelle 6**

| Produkt aus | Pigmentgehalt der Paste | Viskosität der Paste* |
|---|---|---|
| Beispiel 11 | 30,0 % | 491 |
| Beispiel 14 | 30,0 % | 503 |
| Beispiel 18 | 30,0 % | 390 |
| Beispiel 23 | 30,0 % | 1101 |
| Beispiel 24 | 30,0 % | 490 |
| Vergleichsbsp. 29 | 17,0 % | 11400 |
| Vergleichsbsp. 30 | 21,5 % | 1080 |
| Vergleichsbsp. 31 | 19,5 % | 2264 |
| Vergleichsbsp. 32 | 17,0 % | 5182 |

| | | |
|---|---|---|
| * Messung der Viskosität mittels Rheolab MC 10 bei einer Schergeschwindigkeit von 10/s | | |

Die nach dem oben angegebenen Verfahren hergestellten Pasten wurden mit dem Aldehydharz Laropal ® A81 der Fa. BASF so weit verdünnt, dass sich ein Pigment/Harz Verhältnis von 1,5/1 ergibt. Exemplarisch wurden vier Pasten mit den erfindungsgemäßen Dispergiermitteln und vier Pasten mit den Produkten aus den Vergleichsbeispielen zur Pigmentierung verschiedener Bindemittelsysteme eingesetzt.

Um die ausgesprochen breite Verträglichkeit der mit den erfindungsgemäßen Additiven hergestellten Pasten zu dokumentieren, wurden 3 Bindemittel mit stark unterschiedlicher Polarität eingesetzt.
**a. unpolares Bindemittel: Langölalkyd**

| Zusammensetzung des Klarlackes: | |
|---|---|
| Jägerlyd® FS 68 der Fa. Jäger | 68,5 Teile |
| Kristallöl K 60 | 5,2 Teile |
| Testbenzin K 30 | 23,8 Teile |
| Trockner AB der Fa. Borchers | 1,7 Teile |
| Ascinin® R konz. (Hautverhinderer) | 0,8 Teile |

**b. mittelpolares Bindemittel: 2K System; Isocyanatvernetztes Polyacrylat**

| Zusammensetzung des Klarlacks: | |
|---|---|
| Macrynal® SM 510 N der Fa. Höchst (60 %ig in Xylol/BuAc 1/1) | 75,0 Teile |
| Dibutylzinndilaurat (1 % in Xylol) | 0,2 Teile |
| Diethanolamin | 0,3 Teile |
| PMA | 5,0 Teile |
| Shellsol A | 5,0 Teile |
| Xylol | 7,0 Teile |
| Butylacetat | 7,5 Teile |

| Zusammensetzung der Härterlösung: | |
|---|---|
| Desmodur® N 75 der Fa. Bayer (75 %ig in PMA/Xylol 1/1) | 50,0 Teile |
| PMA | 5,0 Teile |
| Shellsol A | 17,5 Teile |
| Xylol | 10,0 Teile |
| Butylacetat | 17,5 Teile |

Der Klarlack wird mit der Härterlösung im Verhältnis. 2 : 1 gemischt
**c. polares Bindemittel: alkohollösliche Nitrocellulose**

| | |
|---|---|
| Nitrocellulose Wolle A 400 (60 %ig in Xylol) | 15,0 Teile |
| Alkydal® F 26 der Fa. Bayer | 25,0 Teile |
| DOP | 2,0 Teile |
| Ethanol | 20,0 Teile |
| Toluol | 10,0 Teile |
| i-Propanol | 5,0 Teile |
| PM | 8,0 Teile |
| Xylol | 15,0 Teile |

Gemäß den Mengen in der nachfolgender Tabelle 7 wurden die verschiedenen Bindemittel mit den oben beschriebenen Pasten pigmentiert. Hierbei wurden die Schwarzpasten vorgelegt und das entsprechende Bindemittel eingerührt. Anschließend wurden die Pigmentlacke auf einem Skandex-Farbrüttler 10 min intensiv vermischt und dann mittels eines Rakels auf Glasplatten appliziert. Die Glanz- und Hazemessungen wurden mit dem Haze-Gloss Messinstrument der Fa. Byk-Gardner nach Din 6753 vorgenommen und sind in Tabelle 8 zusammengefasst.

**Tabelle 7**

| Teile | Langölalkyd | 2K-System | Nitrocellulose |
|---|---|---|---|
| Bindemittel | 92 | 61,3 | 70,4 |
| Härter | | 30,7 | |
| Pigmentpaste | 8 | 8 | 8 |
| Butylacetat | | | 21,6 |

**Tabelle 8**

| | Langölalkyd | | 2K-System | | Nitrocellulose | |
|---|---|---|---|---|---|---|
| Produkt aus | Glanz (20°) | Haze | Glanz (20°) | Haze | Glanz (20°) | Haze |
| Beispiel 11 | 87 | 11 | 86 | 8 | 83 | 10 |
| Beispiel 14 | 87 | 11 | 86 | 7 | 83 | 10 |
| Beispiel 18 | 86 | 13 | 87 | 8 | 84 | 10 |
| Beispiel 23 | 85 | 16 | 84 | 11 | 85 | 9 |
| Beispiel24 | 86 | 13 | 85 | 14 | 80 | 18 |
| Vergleichsbsp. 29 | 23 | 394 (P)* | n. m.* | n. m. | 69 | 78 (P) |
| Vergleichsbsp. 30 | 79 | 63 | n. m. | n. m. | 77 | 44 (P) |
| Vergleichsbsp. 31 | 79 | 68 (P) | n. m. | n. m. | 72 | 49 (P) |
| Vergleichsbsp. 32 | 22 | 393 | n. m. | n. m. | 62 | 65 (P) |

| | | | | | | |
|---|---|---|---|---|---|---|
| * (P) = sichtbare Partikel | | | | | | |
| * n. m. = nicht messbar | | | | | | |

Wie aus Tabelle 8 zu entnehmen ist, führen einzig die Pigmentlacke, die mit den Pasten aus Produkten der Beispiele 11, 14, 18, 23 und 24 hergestellt wurden, zu partikel- und glanzschleierfreien, hochglänzenden Beschichtungen in allen Bindemittelsystemen. Ein ähnliches Bild ergibt sich für Pigmentlacke, die mit anderen für die erfindungsgemäße Verwendung geeigneten Dispergiermitteln sowie mit anderen Pigmenten hergestellt wurden.
Die mit den nicht für die erfindungsgemäße Verwendung vorgesehenen Pasten hergestellten Beschichtungen zeigten deutlich schlechtere Werte in den Glanz- und Hazemessungen, außerdem kam es in den meisten Lacken zur Ausbildung von groben Partikeln durch Unverträglichkeit mit dem Bindemittel und Agglomeration der Pigmentteilchen. Speziell im 2K-System kam es zu so starker Flockulation der . Rußpartikel, dass Glanz- und Glanzschleier(Haze)messungen nicht mehr möglich waren.

## Patentansprüche

1. Dispergiermittel für Pigmente oder Füllstoffe erhältlich durch Versalzung einer aminfunktionellen Verbindung mittels einer Säure,
wobei als aminfunktionelle Verbindung ein Polyamin mit zumindest drei Aminogruppen aus der Gruppe
"nicht modifizierte aliphatische lineare Polyamine und/oder
nicht modifizierte aliphatische verzweigte Polyamine und/oder modifizierte Polyamine,
wobei es sich bei diesen um mit Mono- oder Polyisocyanaten, umgesetzte Polyamine, mit epoxyfunktionellen Stoffen umgesetzte Polyamine, mit cyclischen Carbonaten umgesetzte Polyamine, mittels einer Michael-Reaktion mit α,β-ungesättigten Verbindungen umgesetzte Polyamine, alkylierte und/oder quaternisierte Polyamine und/oder mit Carbonsäuren amidierte verzweigte aliphatische Polyamine handelt,
mit der Maßgabe, daß nach der Modifikation noch drei versalzbare Aminogruppen pro Molekül vorhanden sind",
oder eine Mischung solcher Polyamine verwendet wird
und
wobei als Säure mindestens ein Phosphorsäureester der allgemeinen Formel:
(OH)₃₋ₙPO(OR¹)ₙ
mit n = 1 oder 2,
wobei R¹ einen
Alkyl-, Aryl- oder Aralkylrest mit mindestens 5 C-Atomen und/oder einen Rest eines oxalkylierten Alkohols mit einem zahlenmittleren Molekulargewicht zwischen 100 und 5000 g/mol und/oder einen Rest mit mindestens einer Carbonsäureestergruppe und/oder einer Urethangruppe mit einem zahlenmittleren Molekulargewicht zwischen 100 und 5000 g/mol darstellt,
verwendet wird.

2. Dispergiermittel nach Anspruch 1, **dadurch gekennzeichnet , daß** als aminfunktionelle Verbindung ein Amin aus der Gruppe "Diethylentriamin, Triethylentetramin, Tetraethylenpentamin, Pentaethylenhexamin, Hexaethylenheptamin, höhere lineare Polymerisate der allgemeinen Formel NH₂-(C₂H₄NH)ₙ-C₂H₄-NH₂ mit n>5, verzweigte Poly(C₂-C₄)-Alkylenamine mit tertiären Aminogruppen und einem zahlenmittleren Molekulargewicht bis zu 1000000 g/mol" oder eine Mischung solcher Amine verwendet wird.

3. Dispergiermittel nach Anspruch 2, **dadurch gekennzeichnet, daß** im Fall der höheren linearen Polymerisate Protonen am Stickstoff gegen Alkyl-, Arylund/oder Aralkylgruppen ausgetauscht sind und/oder der Stickstoff quaternisiert vorliegt.

4. Dispergiermittel nach Anspruch 2, **dadurch gekennzeichnet, daß** die verzweigten Poly(C₂-C₄)-Alkylenamine alkoxyliert sind.

5. Dispergiermittel nach Anspruch 2, **dadurch gekennzeichnet, daß** die aminfunktionelle Verbindung ein verzweigtes Poly(C₂-C₄)alkylenamine mit tertiären Aminogruppen ist und ein zahlenmittleres Molekulargewicht von 600 - 200000 g/mol aufweisen und bei welcher gegebenenfalls Protonen am Stickstoff gegen Alkyl-, Aryl- und/oder Aralkylgruppen ausgetauscht sind und/oder die Verbindung quaternisiert vorliegt.

6. Dispergiermittel nach Anspruch 2, **dadurch gekennzeichnet, daß** die verzweigten Poly(C₂-C₄)alkylenamine (alkylenimine) mit tertiären Aminogruppen Aziridinpolymere (Polyimine) sind.

7. Dispergiermittel nach Anspruch 4, **dadurch gekennzeichnet, daß** bei den verzweigten Poly(C₂-C₄)alkylenaminen Protonen an den primären oder sekundären Stickstoffatomen teilweise oder ganz durch Ethylenoxid- und/oder Propylenoxid-Einheiten ersetzt sind.

8. Dispergiermittel nach Anspruch 1, **dadurch gekennzeichnet, daß** als aminfunktionelle Verbindung ein Polyamin mit mindestens drei Aminogruppen pro Molekül aus der Gruppe "Homo- oder Copolymerisate von aminfunktionellen (Meth)acrylaten oder Vinylverbindungen, sowie aminfunktionelle Homo- oder Copolymere deren Aminogruppe mittels polymeranaloger Reaktion in das vorgefertigte Polymer eingefügt oder an diesem Polymer erzeugt wurde", wobei das Homo- oder Copolymerisat ein zahlenmittleres Molekulargewicht bis zu 1000000 g/mol, vorzugsweise von 600 bis 200000 g/mol, aufweist, oder eine Mischung solcher Polyamine, verwendet wird.

9. Dispergiermittel nach einem oder mehreren der Ansprüche 1 bis 8, **dadurch gekennzeichnet, daß** als aminfunktionelle Verbindung ein Polyamin, bei welchem 0,5 bis 90 Mol%, bezogen auf die primären und sekundären Aminogruppen, vorzugsweise 1 bis 50 Mol%, der primären und/oder sekundären Aminogruppen vor, während oder nach der Versalzung mit Carbonsäuren unter Amidbildung, mit Isocyanaten unter Harnstoffbildung und/oder Epoxiden unter Bildung von α-Amino-β-Hydroxyverbindungen und/oder mit α,β-ungesättigten Verbindungen im Sinne einer Michael-Addition umgesetzt wird, oder eine Mischung solcher Amine verwendet wird.

10. Dispergiermittel nach einem oder mehreren der Ansprüche 1 bis 9, **dadurch gekennzeichnet, daß** Wasserstoffatome in den aliphatischen Gruppen des Rests R¹ teilweise durch Halogenatome ersetzt sind.

11. Dispergiermittel nach einem oder mehreren der Ansprüche 1 bis 10, **dadurch gekennzeichnet, daß** R¹ den Rest eines oxalkylierten, vorzugsweise (C₂ - C₄)oxalkylierten Monoalkohols darstellt.

12. Dispergiermittel nach einem oder mehreren der Ansprüche 1 bis 10, **dadurch gekennzeichnet, daß** R¹ den Rest eines carbonsäureester- und/oder urethangruppenhaltigen Monoalkohols und/oder eines carbonsäureesterund/oder urethangruppenhaltigen oxalkylierten Monoalkohols, vorzugsweise eines carbonsäureester- und/oder urethangruppenhaltigen (C₂ - C₄)oxalkylierten Monoalkohols, darstellt.

13. Dispergiermittel nach einem oder mehreren der Ansprüche 1 bis 12, **dadurch gekennzeichnet, daß** R¹ ein zahlenmittleres Molekulargewicht von 200 bis 5000 g/mol, vorzugsweise von 300 bis 2500 g/mol, darstellt.

14. Dispergiermittel nach einem oder mehreren der Ansprüche 1 bis 13, **dadurch gekennzeichnet, daß** die Säure weitere, sich bei der Versalzung inert verhaltende funktionelle Gruppen trägt.

15. Dispergiermittel nach einem oder mehreren der Ansprüche 1 bis 14, **dadurch gekennzeichnet, daß** der Versalzungsgrad, definiert als Quotient zwischen Säureäquivalenten zu Aminäquivalenten, im Bereich zwischen 0,02 bis 1 liegt, besonders bevorzugt Werte zwischen 0,1 und 1 und ganz besonders bevorzugt Werte zwischen 0,5 und 1 annimmt.

16. Verwendung eines Dispergiermittels, welches erhältlich ist durch Versalzung einer aminfunktionellen Verbindung mittels einer Säure,
wobei als aminfunktionelle Verbindung ein Polyamin mit zumindest drei Aminogruppen aus der Gruppe
"nicht modifizierte aliphatische lineare Polyamine und/oder
nicht modifizierte aliphatische verzweigte Polyamine und/oder modifizierte Polyamine,
wobei es sich bei diesen um mit Mono- oder Polyisocyanaten, umgesetzte Polyamine, mit epoxyfunktionellen Stoffen umgesetzte Polyamine, mit cyclischen Carbonaten umgesetzte Polyamine, mittels einer Michael-Reaktion mit α,β-ungesättigten Verbindungen umgesetzte Polyamine, alkylierte und/oder quaternisierte Polyamine und/oder mit Carbonsäuren amidierte aliphatische Polyamine handelt,
mit der Maßgabe, daß nach der Modifikation noch drei versalzbare Aminogruppen pro Molekül vorhanden sind",
oder eine Mischung solcher Polyamine verwendet wird
und
wobei als Säure ein Stoff aus der Gruppe "Phosphorsäureester der allgemeinen Formel:
(OH)₃₋ₙPO(OR¹)ₙ
mit n = 1 oder 2, Sulfonsäuren der allgemeinen Formel HOSO₂R², saure Schwefelsäureester der allgemeinen Formel HOSO₃R²", wobei R¹ und R² einen
Alkyl-, Aryl- oder Aralkylrest mit mindestens 5 C-Atomen und/oder einen Rest eines oxalkylierten Alkohols mit einem zahlenmittleren Molekulargewicht zwischen 100 und 5000 g/mol und/oder einen Rest mit mindestens einer Carbonsäureestergruppe und/oder einer Urethangruppe mit einem zahlenmittleren Molekulargewicht zwischen 100 und 5000 g/mol darstellt, oder eine Mischung solcher Stoffe, wobei R¹ und R² gleich oder verschieden sind, verwendet wird,
(A) zur Herstellung von Pigmente und/oder Füllstoffe enthaltenden Lacken, Pasten und/oder Formmassen
oder
(B) zur Herstellung von dispergierbaren pulverpartikel- und/oder faserpartikelförmigen Feststoffen, insbesondere von dispergierbaren Pigmenten oder Kunststofffüllstoffen, wobei die Partikel mit dem Dispergiermittel beschichtet sind
oder
(C) zur Herstellung eines Pigmentlacks, wobei ein Lackbindemittel und/oder Lösemittel, Pigmente, das Dispergiermittel, übliche Lackhilfsmittel und gegebenenfalls Füllstoffe miteinander vermischt werden
oder
(D) zur Herstellung eines pigmentierten Überzugs auf einem Substrat, wobei mit dem Dispergiermittel ein Pigmentlack hergestellt wird, wobei der Pigmentlack auf das Substrat aufgebracht wird und wobei der auf das Substrat aufgebrachte Pigmentlack eingebrannt oder ausgehärtet beziehungsweise vernetzt wird.

17. Verwendung gemäß Anspruch 16, wobei bei der Verwendung gemäß (B) die Beschichtung mit der Maßgabe durchgeführt wird, daß die dispergierbaren Feststoffe als Paste vorliegen.

18. Verfahren zur Herstellung eines Dispergiermittels nach einem der Ansprüche 1 bis 15, **dadurch gekennzeichnet, daß**
eine aminfunktionelle Verbindung mit zumindest drei Aminogruppen aus der Gruppe
"nicht modifizierte aliphatische lineare Polyamine und/oder
nicht modifizierte aliphatische verzweigte Polyamine und/oder modifizierte Polyamine,
wobei es sich bei diesen um mit Mono- oder Polyisocyanaten, umgesetzte Polyamine, mit epoxyfunktionellen Stoffen umgesetzte Polyamine, mit cyclischen Carbonaten umgesetzte Polyamine, mittels einer Michael-Reaktion mit α,β-ungesättigten Verbindungen umgesetzte Polyamine, alkylierte und/oder quaternisierte Polyamine und/oder mit Carbonsäuren amidierte verzweigte aliphatische Polyamine handelt,
mit der Maßgabe, daß nach der Modifikation noch drei versalzbare Aminogruppen pro Molekül vorhanden sind", oder eine Mischung solcher Polyamine
und
eine Säure aus der Gruppe "Phosphorsäureester der allgemeinen Formel:
(OH)₃₋ₙPO(OR¹)ₙ
mit n = 1 oder 2, wobei R¹ einen Alkyl-, Aryl- oder Aralkylrest mit mindestens 5 C-Atomen und/oder einen Rest eines oxalkylierten Alkohols mit einem zahlenmittleren Molekulargewicht zwischen 100 und 5000 g/mol und/oder einen Rest mit mindestens einer Carbonsäureestergruppe und/oder einer Urethangruppe mit einem zahlenmittleren Molekulargewicht zwischen 100 und 5000 g/mol darstellt, oder eine Mischung solcher Stoffe,
miteinander in einer Versalzungsreaktion umgesetzt werden.

## Claims

1. Dispersant for pigments or fillers obtainable by salinization of an amine- functional compound using a acid,
a polyamine with at least three amino groups from the group
"non-modified aliphatic linear polyamines and/or
non-modified aliphatic branched polyamines and/or modified polyamines,
these being polyamines reacted with mono- or polyisocyanates, polyamines reacted with epoxy-functional substances, polyamines reacted with cyclic carbonates, polyamines reacted with α,β-unsaturated compounds using a Michael reaction, alkylated and/or quatemized polyamines and/or branched aliphatic polyamines amidated with carboxylic acids,
provided that three salinizable amino groups per molecule are still present after modification",
or a mixture of such polyamines being used as amine-functional compound
and
at least one phosphoric acid ester of the general formula:
(OH)₃₋ₙPO(OR¹)ₙ
with n = 1 or 2,
R¹ representing an alkyl, aryl, or aralkyl radical with at least 5 C atoms and/or a radical of an oxalkylated alcohol with a numerically average molecular weight between 100 and 5000 g/mol and/or a radical with at least one carboxylic acid ester group and/or one urethane group with a numerically average molecular weight between 100 and 5000 g/mol, being used as acid.

2. Dispersant according to claim 1, **characterized in that** there is used as amine-functional compound an amine from the group "diethylenetriamine, triethylenetetramine, tetraethylenepentamine, pentaethylenehexamine, hexaethyleneheptamine, higher linear polymerisates of the general formula NH₂-(C₂H₄NH)ₙ-C₂H₄-NH₂ with n>5, branched poly(C₂-C₄)-alkylene amines with tertiary amino groups and a numerically average molecular weight of up to 1000000 g/mol" or a mixture of such amines.

3. Dispersant according to claim 2, **characterized in that**, in the case of the higher linear polymerisates, protons at the nitrogen are exchanged for alkyl, aryl and/or aralkyl groups and/or the nitrogen is present quaternized.

4. Dispersant according to claim 2, **characterized in that** the branched poly(C₂-C₄)-alkylene amines are alkoxylated.

5. Dispersant according to claim 2, **characterized in that** the amino-functional compound is a branched poly(C₂-C₄)alkylene amine with tertiary amino groups and has a numerically average molecular weight of 600 - 200000 g/mol and in which optionally protons at the nitrogen are exchanged for alkyl, aryl and/or aralkyl groups and/or the compound is present quaternized.

6. Dispersant according to claim 2, **characterized in that** the branched poly(C₂-C₄)alkylene amines (alkylene imines) with tertiary amino groups are aziridine polymers (polyimines).

7. Dispersant according to claim 4, **characterized in that**, in the case of branched poly(C₂-C₄)alkylene amines, protons at the primary or secondary nitrogen atoms are partly or completely replaced by ethylene oxide and/or propylene oxide units.

8. Dispersant according to claim 1, **characterized in that** there is used as amino-functional compound a polyamine with at least three amino groups per molecule from the group "homo- or copolymerisates of amino-functional (meth)acrylates or vinyl compounds, as well as amino-functional homo-or copolymers whose amino groups were introduced into the pre-prepared polymer using polymer-analogous reaction or were produced at this polymer", the homo-or copolymerisate having a numerically average molecular weight of up to 1000000 g/mol, preferably of 600 to 200000 g/mol, or a mixture of such polyamines.

9. Dispersant according to one or more of claims 1 to 8, **characterized in that** there is used as amino-functional compound a polyamine in which 0.5 to 90 mol%, relative to the primary and secondary amino groups, preferably 1 to 50 mol%, of the primary and/or secondary amino groups, is reacted before, during or after the salinization with carboxylic acids accompanied by the formation of amide, with isocyanates accompanied by the formation of urea and/or epoxides accompanied by the formation of α-amino-β-hydroxy compounds and/or with α,β-unsaturated compounds along the lines of a Michael addition, or a mixture of such amines.

10. Dispersant according to one or more of claims 1 to 9, **characterized in that** hydrogen atoms are partly replaced by halogen atoms in the aliphatic groups of the radical R¹.

11. Dispersant according to one or more of claims 1 to 10, **characterized in that** R¹ represents the radical of an oxalkylated, preferably (C₂-C₄)oxalkylated monoalcohol.

12. Dispersant according to one or more of claims 1 to 10, **characterized in that** R¹ represents the radical of a monoalcohol containing carboxylic acid ester and/or urethane groups and/or of an oxalkylated monoalcohol containing carboxylic acid ester and/or urethane groups, preferably a (C₂-C₄)oxalkylated monoalcohol containing carboxylic acid ester and/or urethane groups.

13. Dispersant according to one or more of claims 1 to 12, **characterized in that** R¹ represents a numerically average molecular weight of 200 to 5000 g/mol, preferably of 300 to 2500 g/mol.

14. Dispersant according to one or more of claims 1 to 13, **characterized in that** the acid carries further, functional groups behaving inertly during the salinization.

15. Dispersant according to one or more of claims 1 to 14, **characterized in that** the degree of salinization, defined as quotient between the acid equivalents to the amine equivalents, is in the range between 0.02 to 1, particularly preferably assuming values between 0.1 and 1 and quite particularly preferably values between 0.1 and 1.

16. Use of a dispersant which can be obtained by salinization of an amino-functional compound using an acid,
a polyamine with at least three amino groups from the group
"non-modified aliphatic linear polyamines and/or
non-modified aliphatic branched polyamines and/or modified polyamines,
these being polyamines reacted with mono- or polyisocyanates, polyamines reacted with epoxy-functional substances, polyamines reacted with cyclic carbonates, polyamines reacted with α,β-unsaturated compounds using a Michael reaction, alkylated and/or quaternized polyamines and/or branched aliphatic polyamines amidated with carboxylic acids,
provided that three salinizable amino groups per molecule are still present after modification",
or a mixture of such polyamines being used as amine-functional compound
and
a substance from the group "phosphoric acid esters of the general formula:
(OH)₃₋ₙPO(OR¹)ₙ
with n = 1 or 2, sulphonic acids of the general formula HOSO₂R², acid sulphuric acid esters of the general formula HOSO₃R²", R¹ and R² representing an alkyl, aryl or aralkyl radical with at least 5 C atoms and/or a radical of an oxalkylated alcohol with a numerically average molecular weight between 100 and 5000 g/mol and/or a radical with at least one carboxylic acid ester group and/or a urethane group with a numerically average molecular weight between 100 and 5000 g/mol, or a mixture of such substances, R¹ and R² being the same or different, being used as acid,
(A) for the preparation of varnishes, pastes and/or moulding compounds containing pigments and/or fillers
or
(B) for the preparation of dispersible powder-particulate and/or fibre-particulate solids, in particular of dispersible pigments or synthetic fillers, the particles being coated with the dispersant
or
(C) for the preparation of a pigment varnish, a varnish binder and/or solvent, pigments, the dispersant, customary varnish auxiliaries and optionally fillers being mixed together
or
(D) for the preparation of a pigment coating on a substrate, a pigment varnish being prepared with the dispersant, the pigment varnish being applied to the substrate and the pigment varnish applied to the substrate being stoved or cured or cross-linked.

17. Use according to claim 16, the coating being carried out in the case of the use according to (B) on condition that the dispersible solids are present as a paste.

18. Process for the preparation of a dispersant according to one of claims I to 15, **characterized in that**
an amino-functional compound with at least three amino groups from the group
"non-modified aliphatic linear polyamines and/or
non-modified aliphatic branched polyamines and/or modified polyamines,
these being polyamines reacted with mono- or polyisocyanates, polyamines reacted with epoxy-functional substances, polyamines reacted with cyclic carbonates, polyamines reacted with α,β-unsaturated compounds using a Michael reaction, alkylated and/or quatemized polyamines and/or branched aliphatic polyamines amidated with carboxylic acids,
provided that three salinizable amino groups per molecule are still present after modification",
or a mixture of such polyamines
and
an acid from the group "phosphoric acid esters of the general formula:
(OH)₃₋ₙPO(OR¹)ₙ
with n = 1 or 2, R¹ representing an alkyl, aryl or aralkyl radical with at least 5 C atoms and/or a radical of an oxalkylated alcohol with a numerically average molecular weight between 100 and 5000 g/mol and/or a radical with at least one carboxylic acid ester group and/or a urethane group with a numerically average molecular weight between 100 and 5000 g/mol, or a mixture of such substances,
are reacted with each other in a salinization reaction.

## Revendications

1. Dispersant pour pigments ou matières de charge, . pouvant être obtenu par salification d'un composé à fonctionnalité amine à l'aide d'un acide,
où on utilise en tant que composé à fonctionnalité amine une polyamine ayant au moins trois groupes amino choisis dans le groupe constitué "des polyamines linéaires aliphatiques non modifiées et/ou des polyamines ramifiées aliphatiques non modifiées et/ou des polyamines modifiées,
auquel cas, pour ce qui concerne celles-ci, il s'agit de polyamines ayant réagi avec des mono- ou des polyisocyanates, de polyamines ayant réagi avec des substances à fonctionnalité époxy, de polyamines ayant réagi avec des carbonates cycliques, de polyamines ayant réagi, par une réaction de Michael, avec des composés α,β-insaturés de polyamines alkylées et/ou quaternisées et/ou de polyamines aliphatiques ramifiées amidées avec des acides carboxyliques,
avec la condition que, après la modification, il subsiste encore trois groupes amino salifiables par molécule",
ou un mélange de ces polyamines,
et
où, en tant qu'acide, on utilise au moins un ester d'un acide phosphorique, de formule générale :
(OH)₃₋ₙPO(OR¹)ₙ
dans laquelle n vaut 1 ou 2,
R¹ étant un reste alkyle, aryle ou aralkyle ayant au moins 5 atomes de carbone, et/ou un reste d'un alcool alcoxylé ayant une masse moléculaire moyenne en nombre comprise entre 100 et 5000 g/mole et/ou un reste ayant au moins un groupe ester d'acide carboxylique et/ou un groupe uréthanne ayant une masse moléculaire moyenne en nombre comprise entre 100 et 5000 g/mole.

2. Dispersant selon la revendication 1, **caractérisé en ce qu'**on utilise en tant que composé à fonctionnalité amine une amine choisie dans le groupe constitué de "la diéthylènetriamine, la triéthylènetétramine, la tétraéthylènepentamine, la pentaéthylènehexamine, l'hexaéthylèneheptamine, les polymères linéaires supérieurs de formule générale NH₂-(C₂H₄NH)ₙ-C₂H₄-NH₂ avec n>5, les poly(alkylène en C₂-C₄)amines ramifiées comportant des groupes amino tertiaires et ayant une masse moléculaire moyenne en nombre allant jusqu'à 1 000 000 g/mole" ou un mélange de ces amines.

3. Dispersant selon la revendication 2, **caractérisé en ce que**, dans le cas des polymères linéaires supérieurs, des protons se trouvant sur l'azote sont remplacés par des groupes alkyle, aryle et/ou aralkyle, et/ou l'azote est présent sous forme quaternisée.

4. Dispersant selon la revendication 2, **caractérisé en ce que** les poly(alkylène en C₂-C₄)amines ramifiées sont alcoxylées.

5. Dispersant selon la revendication 2, **caractérisé en ce que** le composé à fonctionnalité amine est une poly(alkylène en C₂-C₄)amine ramifiée ayant des groupes amino tertiaires et une masse moléculaire moyenne en nombre de 600 à 200 000 g/mole, et dans laquelle des protons se trouvant sur l'azote sont éventuellement remplacés par des groupes alkyle, aryle et/ou aralkyle, et/ou le composé est présent sous forme quaternisée.

6. Dispersant selon la revendication 2, **caractérisé en ce que** les poly(alkylène en C₂-C₄)amines (alkylénimines) ramifiées sont des polymères de l'aziridine (polyimines) comportant des groupes amino tertiaires.

7. Dispersant selon la revendication 4, **caractérisé en ce que**, dans le cas des poly(alkylène en C₂-C₄)amines ramifiées, des protons se trouvant sur les atomes d'azote primaires ou secondaires sont en totalité ou en partie remplacés par des motifs oxyde d'éthylène et/ou oxyde de propylène.

8. Dispersant selon la revendication 1, **caractérisé en ce qu'**on utilise en tant que composé à fonctionnalité amine une polyamine ayant au moins trois groupes amino par molécule, choisi dans le groupe constitué "des homo- ou copolymères de (méth)acrylates ou de composés vinyliques, à fonctionnalité amine, et des homo- ou copolymères à fonctionnalité amine dont le groupe amino a été inséré par une réaction analogue à une polymérisation dans le polymère préparé au préalable ou a été produit sur ce polymère", l'homo- ou le copolymère présentant une masse moléculaire moyenne en nombre allant jusqu'à 1 000 000 g/mole et de préférence de 600 à 200 000 g/mole, ou un mélange de ces polyamines.

9. Dispersant selon une ou plusieurs des revendications 1 à 8, **caractérisé en ce qu'**on utilise en tant que composé à fonctionnalité amine une polyamine dans laquelle 0,5 à 90 % en moles, de préférence 1 à 50 % en moles, rapportés aux groupes amino primaires et secondaires, des groupes amino primaires et/ou secondaires sont mis à réagir au sens d'une addition de Michael avant, pendant ou après la salification avec des acides carboxyliques, avec formation d'amides, avec des isocyanates avec formation d'urée et/ou avec des époxydes avec formation de composés α-amino-β-hydroxylés et/ou avec des composés à α,β-insaturés ou encore un mélange de ces amines.

10. Dispersant selon une ou plusieurs des revendications 1 à 9, **caractérisé en ce que** des atomes d'hydrogène se trouvant dans les groupes aliphatiques du reste R¹ sont en partie remplacés par des atomes d'halogène.

11. Dispersant selon une ou plusieurs des revendications 1 à 10, **caractérisé en ce que** R¹ représente le reste d'un monoalcool alcoxylé, de préférence alcoxylé en C₂-C₄.

12. Dispersant selon une où plusieurs des revendications 1 à 10, **caractérisé en ce que** R¹ est le reste d'un monoalcool contenant des groupes esters d'acide carboxylique et/ou des groupes uréthanne, et/ou d'un monoalcool alcoxylé contenant des groupes esters d'acide carboxylique et/ou des groupes uréthanne, de préférence d'un monoalcool alcoxylé en C₂-C₄, contenant des groupes esters d'acide carboxylique et/ou des groupes uréthanne.

13. Dispersant selon une ou plusieurs des revendications 1 à 12, **caractérisé en ce que** R¹ a une masse moléculaire moyenne en nombre de 200 à 5000 g/mole, de préférence de 300 à 2500 g/mole.

14. Dispersant selon une ou plusieurs des revendications 1 à 13, **caractérisé en ce que** l'acide porte d'autres groupes fonctionnels, qui ont un comportement inerte lors de la salification.

15. Dispersant selon une ou plusieurs des revendications 1 à 14, **caractérisé en ce que** le degré de salification, défini par le rapport entre les équivalents d'acide et les équivalents d'amine, est compris dans la plage de 0,02 à 1, et d'une manière particulièrement préférée prend des valeurs comprises entre 0,1 et 1 et d'une manière tout particulièrement préférée des valeurs comprises entre 0,5 et 1.

16. Utilisation d'un dispersant pouvant être obtenu par salification d'un composé à fonctionnalité amine à l'aide d'un acide,
où on utilise en tant que composé à fonctionnalité amine une polyamine ayant au moins trois groupes amino choisis dans le groupe constitué "des polyamines linéaires aliphatiques non modifiées et/ou des polyamines ramifiées aliphatiques non modifiées et/ou des polyamines modifiées,
auquel cas, pour ce qui concerne celles-ci, il s'agit de polyamines ayant réagi avec des mono- ou des polyisocyanates, de polyamines ayant réagi avec des substances à fonctionnalité époxy, de polyamines ayant réagi avec des carbonates cycliques, de polyamines ayant réagi, par une réaction de Michael, avec des composés α,β-insaturés de polyamines alkylées et/ou quaternisées et/ou de polyamines aliphatiques amidées avec des acides carboxyliques,
avec la condition que, après la modification, il subsiste encore trois groupes amino salifiables par molécule",
ou un mélange de ces polyamines,
et
où, en tant qu'acide, on utilise un produit choisi dans le groupe constitué des "esters d'acide phosphorique de formule générale :
(OH)₃₋ₙPO(OR¹)ₙ
dans laquelle n vaut 1 ou 2, des acides sulfoniques de formule générale HOSO₂R², des esters acides de l'acide sulfurique de formule générale HOSO₃R²", R¹ et R² étant un reste alkyle, aryle ou aralkyle ayant au moins 5 atomes de carbone et/ou un reste d'un alcool alcoxylé ayant une masse moléculaire moyenne en nombre comprise entre 100 et 5000 g/mole et/ou un reste ayant au moins un groupe ester d'acide carboxylique et/ou un groupe uréthanne ayant une masse moléculaire moyenne en nombre comprise entre 100 et 5000 g/mole, ou un mélange de ces produits, R¹ et R² étant identiques ou différents,
(A) pour préparer des laques et vernis, pâtes et/ou mélanges à mouler contenant des pigments et/ou des matières de charge, ou
(B) pour préparer des solides sous forme de particules pulvérulentes et/ou de particules fibreuses, dispersibles, en particulier de pigments ou de matières de chàrge pour matières plastiques, dispersibles, les particules étant enrobées du dispersant, ou
(C) pour préparer un vernis ou une laque, pigmenté, auquel cas un liant pour vernis et laque et/ou un solvant, des pigments, le dispersant, des adjuvants usuels pour laques et vernis et éventuellement des matières de charge, sont mélangés les uns aux autres, ou
(D) pour préparer un revêtement pigmenté sur un substrat, un vernis ou une laque, pigmenté, étant préparé avec le dispersant, le vernis ou la laque, pigmenté, étant appliqué sur le subjectile et le vernis ou la laque, pigmenté, appliqué sur le substrat étant cuit, durci ou réticulé.

17. Utilisation selon la revendication 16, le revêtement, dans le cadre de l'utilisation selon (B), étant réalisé avec la condition que les solides dispersibles se présentent sous forme d'une pâte.

18. Procédé de préparation d'un dispersant selon l'une des revendications 1 à 15, **caractérisé en ce qu'**on fait réagir les uns avec les autres, dans le cadre d'une réaction de salification, un composé à fonctionnalité amine ayant au moins trois groupes amino, choisis dans le groupe constitué "des polyamines linéaires aliphatiques non modifiées et/ou des polyamines ramifiées aliphatiques non modifiées et/ou des polyamines modifiées,
auquel cas, pour ce qui concerne celles-ci, il s'agit de polyamines ayant réagi avec des mono- ou des polyisocyanates, de polyamines ayant réagi avec des substances à fonctionnalité époxy, de polyamines ayant réagi avec des carbonates cycliques, de polyamines. ayant réagi, par une réaction de Michael, avec des composés α,β-insaturés de polyamines alkylées et/ou quaternisées et/ou de polyamines aliphatiques ramifiées amidées avec des acides carboxyliques,
avec la condition que, après la modification, sont encore présents trois groupes amino salifiables par molécule",
ou un mélange de ces polyamines, et
un acide du groupe constitué des "esters de l'acide phosphorique de formule générale
(OH)₃₋ₙPO(OR¹)ₙ
dans laquelle n vaut 1 ou 2, R¹ étant un reste alkyle, aryle ou aralkyle ayant au moins 5 atomes de carbone, et/ou un reste d'un alcool alcoxylé ayant une masse moléculaire moyenne en nombre comprise entre 100 et 5000 g/mole et/ou un reste ayant au moins un groupe ester d'acide carboxylique et/ou un groupe uréthanne ayant une masse moléculaire moyenne en nombre comprise entre 100 et 5000 g/mole, ou un mélange de ces substances.
